# EUROPEAN PATENT SPECIFICATION

(11) **EP 0 774 830 B1**
(45) Date of publication and mention of the grant of the patent: **05.06.2002**
(21) Application number: 95307472.1
(22) Date of filing: 20.10.1995
(51) Int. Cl.: H02P 7/36, H02P 13/06, F25B 49/02

(54) **Apparatus for controlling a compressor in a cooling system**
Gerät zur Kompressorsteuerung eines Kühlsystems
Appareillage de commande d'un système de refroidissement

(43) Date of publication of application: 21.05.1997
(73) Proprietor: LG ELECTRONICS INC., Seoul (KR)
(72) Inventor: Lee, Hyeong-Kook, Seoul (KR); Park, Kyeong-Bae, Seoul (KR)
(74) Representative: Hitchcock, Esmond Antony

(56) References cited:
- WO-A-93/22716
- DE-U- 9 105 139
- FR-A- 2 259 331
- GB-A- 2 238 677
- US-A- 4 831 313

## Description

This invention relates to an apparatus for controlling the power delivered to a cooling compressor, which may be used in refrigerators or air conditioning systems, for example.

In some known systems for controlling cooling compressors, the compressor can only be operated at one speed and therefore control of the temperature in the region being cooled is sought by switching the compressor on or off as necessary. That is, if a predetermined temperature is reached in the cooled region, the compressor is turned off. After a given period of time, the compressor is turned on again and operates until the predetermined temperature is restored. This is commonly termed the "power on/off" control method. The repeated stopping and starting of the motor of the compressor reduces its working life and can generate high noise levels. Also, the cooled region may be subjected to severe temperature changes.

Another conventional cooling control system uses an inverter to adjust the work rate of the compressor. When the cooled region in such a system reaches a predetermined temperature, this rate is reduced by the inverter. Conversely, if the temperature of the cooled region rises above the predetermined temperature, the work rate of the compressor is increased so that heat energy is removed from the region more quickly. Accordingly, the rate is varied depending on the magnitude of the deviation of the temperature of the cooled region from the predetermined temperature. However, the inverter used in such a system is expensive, and therefore substantially increases the cost of the overall cooling system.

US-A-4831313 discloses an electronic control system for a two-speed motor used in a heat transfer system such as a heat pump or air conditioner. The speed of the motor is controlled by switching a single voltage level, output by a power supply, between two terminals of the electric motor, either a high speed or a low speed terminal.

The present invention seeks to address the problems associated with the known systems discussed above.

The present invention provides an apparatus according to claim 1.

The invention will now be described by way of example and with reference to the accompanying schematic drawings wherein:
Figure 1 is a longitudinal sectional view of a linear compressor; and
Figure 2 is a block diagram representing a cooling system including a control apparatus configured according to an embodiment of the invention.

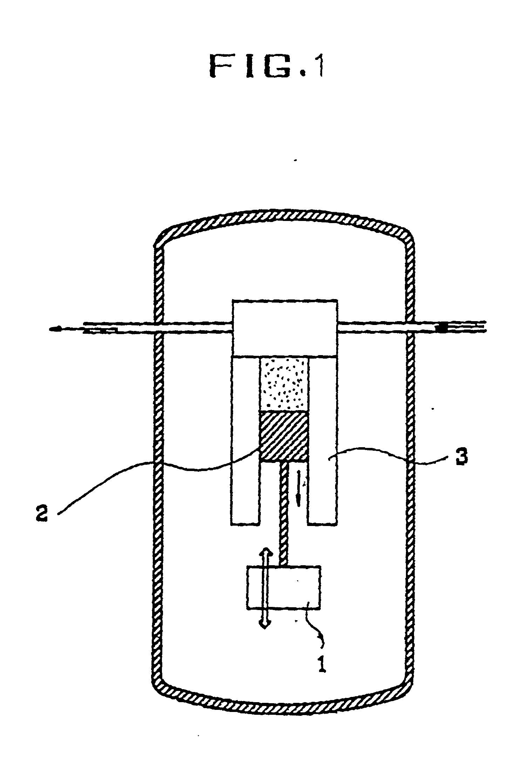

The compressor shown in Figure 1 comprises a oscillator 1 which drives a piston 2 within a cylinder 3. The rate at which the oscillator operates can be varied by adjusting the input voltage applied thereto. The greater the voltage level the higher the work rate of the oscillator. This increases the amount of refrigerant drawn into cylinder 3 by each stroke of the piston 2, and therefore the cooling power of the system is increased. Reduction of the applied voltage has the opposite effect.

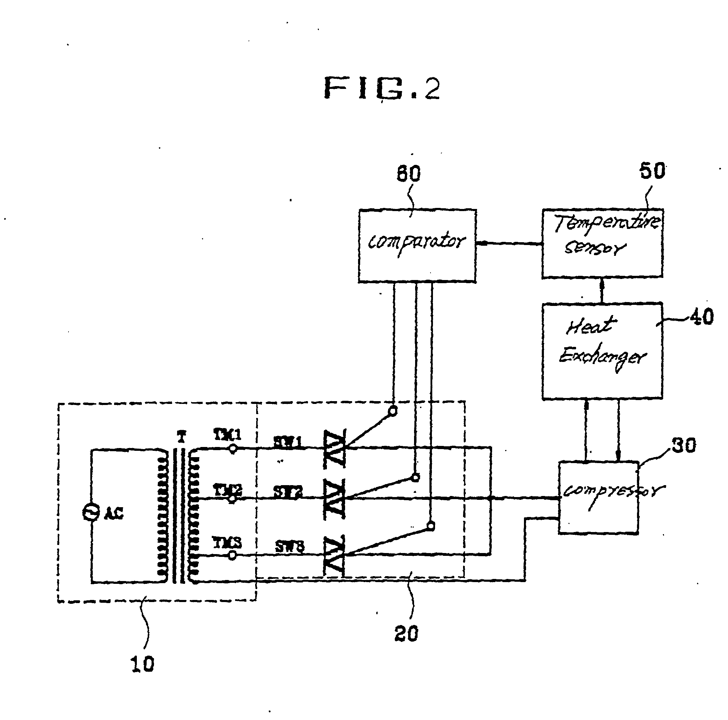

In Figure 2, a compressor 30 of the type illustrated in Figure 1 is connected to a heat exchanger 40 such that refrigerant can be circulated therebetween. A power source 10 includes an input power supply (for example 60Hz, 110/220V) which is applied to a transformer T. A plurality of different voltage levels are outputted on the secondary ports (TM1,TM2,TM3) of the transformer. A voltage controller 20 is connected to each of the voltage outputs, which is in turn, connected to the compressor 30. A comparator 60 is provided for comparing a predetermined temperature with the actual temperature of the heat exchanger 40, which is detected by a temperature sensor 50.

The voltage controller 20 includes a plurality of triode AC switches (triacs) (SW1,SW2,SW3) for switching a respective secondary output port voltage of the transformer (T), according to the output signal of the comparator 60.

When the system is operated, the temperature detected by temperature sensor 50 and a predetermined temperature are compared by comparator 60. A triac of the voltage controller 20 is selected according to the result of this comparison, and the triac is activated by applying a voltage to a gate thereof. This connects one of the voltage outputs of the transformer T to the compressor 30.

In the embodiment of Figure 2, three triacs SW1,SW2,SW3 are employed. If the actual temperature detected by the temperature sensor 50 is higher than the predetermined temperature, triac SW1 is driven so as to connected the compressor 30 with a higher voltage port TM1, thereby increasing its cooling power. Conversely, if the actual temperature detected by temperature sensor 50 is lower than the predetermined temperature, triac SW3 is driven so as to connect the compressor with a lower voltage port TM3, thus decreasing its cooling power. In this manner, a plurality of output ports are selectively connected to the compressor to vary the voltage applied thereto.

The system configuration of the invention is inexpensive and avoids the high levels of noise and wear associated with the conventional "power on/off" control method as the motor operates continuously. It also does not produce the sudden temperature changes which may be caused by this conventional system.

## Claims

1. A apparatus for controlling the flow of refrigerant in a cooling system comprising:
a supply unit (T) having an input for connection to a power source;
a plurality of outputs (TM1,TM2,TM3) for delivering power at different respective voltage levels;
a cylinder (3);
a piston (2) arranged for reciprocating movement within the cylinder (3) to draw refrigerant into the cylinder (3) and to expel refrigerant from the cylinder (3);
an oscillator (1) connected to the piston (2) and arranged to be driven by a voltage (TM1,TM2,TM3) to reciprocate the piston (2) ;
a comparator (60) for comparing a temperature at a position within the cooling system with a predetermined temperature and outputting a signal related to the difference therebetween; and
a selecting means (20) for operatively selecting and connecting one of the said plurality of outlets (TM1,TM2,TM3) to the oscillator (1) to drive the oscillator (1) depending upon the output of the comparator, the amount of refrigerant being drawn into the cylinder (3) by each stroke of the piston (2) being dependent on the voltage applied to the oscillator (1).

2. Apparatus according to Claim 1, wherein the voltage selection means comprises a plurality of triacs (SW1,SW2,SW3), each connected to a respective output of the power supply unit (T).

3. Apparatus according to Claim 1 or Claim 2, wherein the power supply unit has three outputs.

4. Apparatus according to any preceding claim, wherein the power supply unit (T) is a transformer.

## Patentansprüche

1. Vorrichtung zum Regeln des Flusses von Kühlmittel in einem Kühlsystem, umfassend:
eine Zuführungseinheit (T) mit einem Eingang für den Anschluss an eine Stromquelle;
eine Mehrzahl von Ausgängen (TM1, TM2, TM3) zum Zuführen von Strom mit verschiedenen jeweiligen Spannungspegeln;
einen Zylinder (3);
einen Kolben (2) zur Ausführung einer Pendelbewegung in dem Zylinder (3), um Kühlmittel in den Zylinder (3) einzusaugen und Kühlmittel aus dem Zylinder (3) auszustoßen;
einen Oszillator (1), der mit dem Kolben (2) verbunden ist und der von einer Spannung (TM1, TM2, TM3) zum Hin- und Herbewegen des Kolbens (2) angetrieben wird;
einen Komparator (60) zum Vergleichen einer Temperatur an einer Position in dem Kühlsystem mit einer vorbestimmten Temperatur und zum Ausgeben eines Signals in Bezug auf die Differenz dazwischen; und
ein Auswahlmittel (20), um einen aus der genannten Mehrzahl von Ausgängen (TM1, TM2, TM3) betriebsmäßig zu wählen und mit dem Oszillator (1) zu verbinden, um den Oszillator (1) je nach dem Ausgang des Komparators anzutreiben, wobei die Menge an bei jedem Hub des Kolbens (2) in den Zylinder (3) gesaugtem Kühlmittel von der an den Oszillator (1) angelegten Spannung (1) abhängig ist.

2. Vorrichtung nach Anspruch 1, bei der das Spannungsauswahlmittel eine Mehrzahl von Triacs (SW1, SW2, SW3) umfasst, die jeweils mit einem jeweiligen Ausgang der Stromversorgungseinheit (T) verbunden sind.

3. Vorrichtung nach Anspruch 1 oder Anspruch 2, bei der die Stromversorgungseinheit drei Ausgänge hat.

4. Vorrichtung nach einem der vorherigen Ansprüche, bei der die Stromversorgungseinheit (T) ein Transformator ist.

## Revendications

1. Appareil pour réguler le débit de frigorigène dans un circuit de réfrigération, comprenant :
un module d'alimentation (T) ayant une entrée pour la connexion à une source d'énergie électrique ;
une pluralité de sorties (TM1, TM2, TM3) pour fournir l'énergie électrique à différents niveaux de tension respectifs ;
un cylindre (3) ;
un piston (2) agencé pour se déplacer en mouvement alternatif à l'intérieur du cylindre (3) afin d'aspirer le frigorigène dans le cylindre (3) et de chasser le frigorigène du cylindre (3) ;
un oscillateur (1) relié au piston (2) et agencé pour être commandé par une tension (TM1, TM2, TM3) pour faire déplacer le piston (2) en mouvement alternatif ;
un comparateur (60) pour comparer la température d'une position à l'intérieur du circuit de refroidissement à une température prédéterminée et émettre un signal relatif à la différence entre ces deux températures ; et
un moyen de sélection (20) pour sélectionner en fonctionnement et connecter l'une de ladite pluralité de sorties (TM1, TM2, TM3) à l'oscillateur (1) afin de commander l'oscillateur (1) en fonction de la sortie du comparateur, la quantité de frigorigène aspirée dans le cylindre (3) par chaque course du piston (2) dépendant de la tension appliquée à l'oscillateur (1).

2. Appareil selon la revendication 1, dans lequel le moyen de sélection de tension comprend une pluralité de triacs (SW1, SW2, SW3), dont chacun est connecté à une sortie respective du module d'alimentation électrique (T).

3. Appareil selon la revendication 1 ou la revendication 2, dans lequel le module d'alimentation électrique a trois sorties.

4. Appareil selon l'une quelconque des revendications précédentes dans lequel le module d'alimentation électrique (T) est un transformateur.
